# EUROPÄISCHE PATENTSCHRIFT

(11) **EP 3 028 892 B1**
(45) Veröffentlichungstag und Bekanntmachung des Hinweises auf die Patenterteilung: **11.07.2018**
(21) Anmeldenummer: 15003392.6
(22) Anmeldetag: 28.11.2015
(51) Int. Cl.: B60L 11/18

(54) **VERFAHREN ZUR POSITIONIERUNG EINES KRAFTFAHRZEUGS IN EINER LADEPOSITION UND KRAFTFAHRZEUG**
METHOD FOR POSITIONING A MOTOR VEHICLE IN A LOADING POSITION AND MOTOR VEHICLE
PROCEDE DE POSITIONNEMENT D'UN VEHICULE AUTOMOBILE DANS UNE POSITION DE CHARGEMENT ET VEHICULE AUTOMOBILE

(30) Priorität: 02.12.2014 DE 102014017800
(43) Veröffentlichungstag der Anmeldung: 08.06.2016
(73) Patentinhaber: AUDI AG, 85045 Ingolstadt (DE)
(72) Erfinder: Schuller, Florian, DE - 85737 Ismaning (DE); Elias, Björn, DE - 85120 Hepberg (DE); Heinemann, Patrick, DE - 85092 Kösching (DE)
(74) Vertreter: Thielmann, Frank

(56) Entgegenhaltungen:
- EP-A1- 2 199 141
- WO-A2-2011/114208
- DE-A1-102013 208 678
- US-A1- 2012 262 002

## Beschreibung

Die Erfindung betrifft ein Verfahren zur Positionierung eines Kraftfahrzeugs in einer zum kontaktlosen Laden eines Energiespeichers des Kraftfahrzeugs durch eine Ladeplatte geeigneten Ladeposition , umfassend die Schritte:
a. Erfassen einer die relative Position der Ladeposition zu dem Kraftfahrzeug beschreibenden ersten Positionsinformation durch eine erste Erfassungseinrichtung mit einer ersten Erfassungsreichweite,
b. Führen des Kraftfahrzeugs in Richtung der Ladeposition durch Auslösen wenigstens eines von der ersten Positionsinformation abhängigen, längs- und/oder querführenden Fahreingriffs und/oder Auslösen wenigstens eines die Führung des Kraftfahrzeugs betreffenden, von der ersten Positionsinformation abhängigen Fahrhinweises an einen Fahrer des Kraftfahrzeugs durch eine Steuereinrichtung des Kraftfahrzeugs,
c. Erfassen einer zweiten Positionsinformation durch eine zweite Erfassungseinrichtung mit einer gegenüber der ersten Erfassungsreichweite kürzeren zweiten Erfassungsreichweite, und
d. Führen des Kraftfahrzeugs zu der Ladeposition durch Auslösen wenigstens eines von der zweiten Positionsinformation abhängigen, längs- und/oder querführenden weiteren Fahreingriffs und/oder Auslösen wenigstens eines die Führung des Kraftfahrzeugs betreffenden, von der zweiten Positionsinformation abhängigen weiteren Fahrhinweises an einen Fahrer des Kraftfahrzeugs durch die Steuereinrichtung des Kraftfahrzeugs,
wobei die erste Erfassungseinrichtung wenigstens eine Sensoreinrichtung umfasst, durch die das Kraftfahrzeugumfeld betreffende Umfelddaten erfasst werden, wonach die erste Positionsinformation in Abhängigkeit der Umfelddaten bestimmt wird.

Hybridfahrzeuge und rein elektrisch angetriebene Kraftfahrzeuge umfassen Energiespeicher, die elektrische Energie zum Betrieb des Kraftfahrzeugs bereitstellen. Eine komfortable Möglichkeit zum Laden dieser Energiespeicher ist ein kontaktloses Laden, bei dem das Kraftfahrzeug über bzw. benachbart zu einer infrastrukturseitigen Ladeplatte positioniert wird und eine kontaktlose Energieübertragung von der infrastrukturseitigen Ladeplatte zu einer fahrzeugseitigen Ladeplatte erfolgt. Für ein kontaktloses Laden eines Energiespeichers eines Kraftfahrzeugs ist es jedoch erforderlich, die fahrzeugseitige Ladeplatte und die infrastrukturseitige Ladeplatte sehr präzise in einer vorgegebenen relativen Lage anzuordnen. Hierzu muss ein Kraftfahrzeug in einer definierten Lage bezüglich der Ladeplatte geparkt werden.

Um eine ausreichend exakte Positionierung des Kraftfahrzeugs bezüglich der Ladeplatte zu ermöglichen, können infrastrukturseitige Ladeplatten und Kraftfahrzeuge Systeme umfassen, die einen Fahrer beim Positionieren des Kraftfahrzeugs bezüglich der Ladeplatte unterstützen. Hierfür werden insbesondere Positionserfassungssysteme auf Funkbasis genutzt.

Eine ausreichende Präzision wird typischerweise nur mit kurzreichweitigen Positionserfassungssystemen erreicht. Daher sind Assistenzfunktionen zur Positionierung des Kraftfahrzeugs nur in der unmittelbaren Umgebung der Ladeplatte verfügbar. Da die Manövrierbarkeit eines Kraftfahrzeugs durch kinematische Gegebenheiten, beispielsweise den maximalen Lenkwinkel des Kraftfahrzeugs, eingeschränkt ist, ist es häufig nicht möglich, bei einem Erreichen eines Bereichs, in dem eine Positionierung mit Hilfe eines derartigen Positionserfassungssystems möglich ist, das Kraftfahrzeug unter Berücksichtigung von Nachbarobjekten exakt über der Ladeplatte zu positionieren, ohne dass das Kraftfahrzeug den Wirkbereich des Positionserfassungssystems verlässt. Somit ist häufig keine durchgehende Fahrerunterstützung während eines Positionierungsvorgangs möglich und eine assistierte bzw. automatisierte Führung des Kraftfahrzeugs in eine Ladeposition kann nicht bereitgestellt werden.

Aus der Druckschrift WO 2011/114208 A2 ist ein Kraftfahrzeug bekannt, das dazu eingerichtet ist, kontaktfrei elektrische Energie von einer Übertragungsspule zu beziehen. Durch eine Kamera können Bilder aufgenommen werden, aus denen eine relative Position des Kraftfahrzeugs zu einer Energieübertragungseinrichtung bestimmt werden kann. In Abhängigkeit dieser relativen Position kann das Kraftfahrzeug zu der Energieübertragungseinrichtung geführt werden. Ab dem Zeitpunkt, zu dem die Energieübertragungseinrichtung sich unterhalb des Kraftfahrzeugs befindet und somit nicht mehr durch die Kamera erfasst werden kann, erfolgt die weitere Führung dadurch, dass ein Energieversorgungsstatus überwacht wird, um den Abstand zwischen der Energieübertragungseinrichtung und der kraftfahrzeugseitigen Energieempfangseinrichtung zu bestimmen.

Der Erfindung liegt somit die Aufgabe zugrunde, ein Verfahren zur Positionierung eines Kraftfahrzeugs bezüglich einer Ladeplatte anzugeben, dass demgegenüber bezüglich der Reichweite einer Positionserfassung verbessert ist und dennoch eine exakte Positionierung des Kraftfahrzeugs ermöglicht.

Die Aufgabe wird erfindungsgemäß durch ein Verfahren der eingangs genannten Art gelöst, wobei die zweite Erfassungseinrichtung wenigstens eine Empfangseinrichtung zum Empfang eines durch eine der Ladeplatte oder dem Kraftfahrzeug zugeordnete Sendeeinrichtung ausgesendeten Funksignals umfasst, wobei durch die zweite Erfassungseinrichtung die zweite Positionsinformation durch Auswertung des Funksignals bestimmt wird, wobei vor Schritt a) durch die erste Erfassungseinrichtung ein Vorhandensein der Ladeplatte im Umfeld des Kraftfahrzeugs erfasst wird, wonach ein eine Nutzbarkeit der Ladeplatte betreffender Ladeplattenhinweis an den Fahrer des Kraftfahrzeugs ausgegeben wird, wonach das Verfahren in Abhängigkeit einer Bedieneingabe des Fahrers mit Schritt a) zur Führung des Kraftfahrzeugs zu der zum kontaktloses Laden des Energiespeichers durch die Ladeplatte geeigneten Ladeposition fortgesetzt oder abgebrochen wird.

Erfindungsgemäß wird vorgeschlagen, für eine Führung des Kraftfahrzugs zur Ladeposition zwei Erfassungseinrichtungen zur Erfassung von Positionsinformationen zu nutzen, die unterschiedliche Reichweiten aufweisen. Die erste und/oder die zweite Erfassungseinrichtung können kraftfahrzeugseitige Erfassungseinrichtungen sein. Alternativ wäre es möglich, dass die erste und/oder die zweite Erfassungseinrichtung ladeplattenseitige Erfassungseinrichtungen sind. Daneben können die erste und/oder die zweite Erfassungseinrichtung als von der Ladeplatte separat ausgebildete Infrastruktureinrichtung oder als Teil einer solchen ausgebildet sein. Wird als erste und/oder zweite Erfassungseinrichtung eine fahrzeugexterne Erfassungseinrichtung verwendet, so kann die erste und/oder zweite Positionsinformation nach ihrer Erfassung drahtlos an das Kraftfahrzeug übertragen werden.

Beispielsweise kann die erste Erfassungseinrichtung Sensorinformationen, insbesondere Bilddaten von Kraftfahrzeugsensoren auswerten, um eine erste Positionsinformation zu ermitteln. Die erste Positionsinformation kann relativ ungenau sein. Dennoch ermöglicht die erste Positionsinformation bereits eine Führung des Kraftfahrzeugs in Richtung der Ladeposition. Das Kraftfahrzeug wird somit in einen Bereich geführt, der innerhalb der zweiten Erfassungsreichweite der zweiten Erfassungseinrichtung liegt. Bei der zweiten Erfassungseinrichtung kann es sich beispielsweise um ein eingangs erläutertes System zur funksignalbasierten Positionserfassung handeln. Die zweite Positionsinformation kann genauer sein als die erste Positionsinformation, das heißt, die tatsächliche relative Position der Ladeposition bzw. Ladeplatte zum Kraftfahrzeug mit einem geringeren Fehler beschreiben als die erste Positionsinformation. Im erfindungsgemäßen Verfahren kann somit zunächst eine Grobpositionierung und anschließend eine Feinpositionierung erfolgen.

Die Positionsinformation kann jeweils nur eine relative Position der Ladeposition zu dem Kraftfahrzeug beschreiben, vorzugsweise wird jedoch auch eine relative Orientierung berücksichtigt.

Im erfindungsgemäßen Verfahren kann die Positionierung des Kraftfahrzeugs vorzugsweise derart erfolgen, dass eine durchgehende Vorwärts- oder Rückwärtsfahrt zur Ladeposition ermöglicht wird.

Verfahren zur Führung von Kraftfahrzeugen in vorgegebene relative oder absolute Positionen sind im Stand der Technik grundsätzlich bekannt und sollen nicht detailliert erläutert werden.

Im erfindungsgemäßen Verfahren ist es möglich, dass während der Führung des Kraftfahrzeugs jeweils wiederholt die erste bzw. die zweite Positionsinformation ermittelt wird und die Führung des Kraftfahrzeugs entsprechend angepasst wird. Insbesondere werden die Schritte a und b bzw. c und d wiederholt durchgeführt, wobei in den Schritten a bzw. c jeweils aktualisierte erste bzw. zweite Positionsinformationen erfasst werden und in den Schritten b und d jeweils eine Führung in Abhängigkeit dieser aktualisierten Positionsinformationen erfolgt. Während der Führung des Kraftfahrzeugs in den Schritten b und d kann die Fahrbarkeit einer geplanten Trajektorie und/oder die Durchführbarkeit geplanter Fahrmanöver überprüft werden, wobei weitere Umfelddaten, wie die Positionen und Ausdehnungen weiterer Verkehrsteilnehmer und/oder Infrastruktureinrichtungen berücksichtigt werden können.

Es ist möglich, dass die erste Erfassungseinrichtung wenigstens eine Sensoreinrichtung, insbesondere wenigstens eine Kamera umfasst, durch die das Kraftfahrzeugumfeld betreffende Umfelddaten erfasst werden, wonach die erste Positionsinformation in Abhängigkeit der Umfelddaten bestimmt wird. Insbesondere kann eine Position der Ladeplatte oder eine Position einer der Ladeplatte zugeordneten Markierung in den Umfelddaten, beispielsweise durch einen Bilderkennungsalgorithmus, erkannt werden. Die erste Positionsinformation kann anschließend in Abhängigkeit der erkannten Position der Ladeplatte bzw. des Markers bestimmt werden.

Die zweite Erfassungseinrichtung kann wenigstens eine Empfangseinrichtung zum Empfangen eines durch eine der Ladeplatte oder dem Kraftfahrzeug zugeordnete Sendeeinrichtung ausgesendeten Funksignals umfassen, wobei durch die zweite Erfassungseinrichtung die zweite Positionsinformation durch Auswertung des Funksignals bestimmt wird. Das Funksignal kann insbesondere ein Funksignal sein, das von einer Kommunikationseinrichtung der Ladeplatte ausgestrahlt wird, die zur Kommunikation mit einer kraftfahrzeugseitigen Einrichtung während des Ladevorgangs dient. Alternativ ist es möglich, dass die zweite Erfassungseinrichtung eine ladeplattenseitige oder anderweitig infrastrukturseitige Erfassungseinrichtung ist, wobei die Empfangseinrichtung durch eine dem Kraftfahrzeug zugeordnete Sendeeinrichtung gesendete Funksignale empfängt. In diesem Fall kann das Funksignal ein Funksignal sein, das von einer Kommunikationseinrichtung des Kraftfahrzeugs ausgestrahlt wird, die zur Kommunikation mit einer ladeplattenseitigen Einrichtung während des Ladevorgangs dient.

Alternativ wäre es beispielsweise möglich durch eine Induktionsspule der Ladeplatte, die der Energieübertragung zum Kraftfahrzeug dient, im Rahmen der Positionierung elektromagnetische Felder abzustrahlen und diese durch eine oder mehrere kraftfahrzeugseitige Einrichtungen zu erfassen, um beispielsweise aus relativen Empfangsamplituden die zweite Positionsinformation zu bestimmen.

Die zweite Empfangseinrichtung kann mehrere der Empfangseinrichtungen zum Empfang des Funksignals aufweisen, wobei die zweite Positionsinformation in Abhängigkeit von Empfangsstärken des Funksignals an und/oder Signallaufzeiten des Funksignals zu den Empfangseinrichtungen bestimmt wird. Insbesondere können relative Laufzeiten bzw. Empfangsstärken bestimmt werden. Alternativ wäre es möglich, absolute Laufzeiten beispielsweise dadurch zu bestimmen, dass ladeplattenseitig und kraftfahrzeugseitig synchronisierte Zeitinformationen vorliegen, wobei eine Laufzeit direkt aus einem Unterschied von Sendezeit und Empfangszeit bestimmt werden kann. Eine Synchronisation von Zeiten ist beispielsweise durch GPS-Signale möglich. Eine weitere Möglichkeit, eine Laufzeit zu bestimmen ist, ein automatisches Antworten auf ein empfangenes Funksignal vorzusehen und anschließend die Gesamtlaufzeit des Sendesignals und des Antwortsignals zu erfassen.

Vorteilhaft kann im erfindungsgemäßen Verfahren die Führung des Kraftfahrzeugs derart erfolgen, dass bei einem Erreichen der zweiten Erfassungsreichweite die kinematisch maximalen Möglichkeiten zur Korrektur der Fahrzeugführung bereitstehen, das heißt, dass Fehler in der Erfassung der ersten Positionsinformationen im Rahmen der Führung des Kraftfahrzeugs aufgrund der zweiten Positionsinformation ausgeglichen werden können. Es ist daher möglich, dass die Führung des Kraftfahrzeugs in Schritt b entlang einer Trajektorie von der momentanen Kraftfahrzeugposition zu der Ladeposition erfolgt, wobei die Trajektorie durch die Steuereinrichtung derart ermittelt und/oder angepasst wird, dass in zumindest einem Abschnitt der Trajektorie ein durch die Trajektorie vorgegebener Querführungsparameter des Kraftfahrzeugs von einem vorgegebenen Grenzwert für den Querführungsparameter maximal beabstandet ist. Als Wert für den Querführungsparameter innerhalb des Abschnitts kann beispielsweise ein Maximum innerhalb dieses Abschnitts, ein mittlerer Wert innerhalb dieses Abschnitts, eine Integral oder ähnliches berücksichtigt werden.

Weiterhin kann eine Position prognostiziert werden, an der die Trajektorie die zweite Erfassungsreichweite erreicht. Der Abschnitt der Trajektorie, für den der Abstand zwischen Querführungsparameter und Grenzwert maximiert wird, kann anschließend so gewählt werden, dass der Abschnitt im Bereich des Erreichens der zweiten Erfassungsreichweite und/oder innerhalb der zweiten Erfassungsreichweite liegt.

Der Grenzwert für den Querführungsparameter kann konstruktionsbedingt vorgegeben sein und beispielsweise ein maximaler Lenkwinkel des Kraftfahrzeugs sein.

Es ist möglich, dass in Schritt d der Fahrhinweis und/oder der Fahreingriff zusätzlich in Abhängigkeit der ersten Positionsinformation bestimmt werden. Es ist somit möglich, die erste und die zweite Positionsinformation zu fusionieren, womit die Genauigkeit der Bestimmung der Ladeposition weiter erhöht werden kann. Insbesondere können die erste und die zweite Positionsinformation abstandsabhängig gewichtet werden.

Vor Schritt a kann durch die erste Erfassungseinrichtung ein Vorhandensein der Ladeplatte im Umfeld des Kraftfahrzeugs erfasst werden, wonach ein eine Nutzbarkeit der Ladeplatte betreffender Ladeplattenhinweis an den Fahrer des Kraftfahrzeugs ausgegeben wird, wonach das Verfahren in Abhängigkeit einer Bedieneingabe des Fahrers mit Schritt a zur Führung des Kraftfahrzeugs zu der zum kontaktlosen Laden des Energiespeichers durch die Ladeplatte geeigneten Ladeposition fortgesetzt oder abgebrochen wird. Vorteilhaft werden durch die erste Erfassungseinrichtung oder andere Sensoren des Kraftfahrzeugs zusätzliche Umfeldinformationen ermittelt und ausgewertet, um eine Verfügbarkeit der Ladeplatte, also insbesondere, ob diese bereits durch ein weiteres Kraftfahrzeug belegt ist, zu ermitteln. Durch das beschriebene Vorgehen kann ein Fahrer frühzeitig auf ein Vorhandensein einer Ladeplatte hingewiesen werden und ihm können Assistenzfunktionen, insbesondere Fahrhinweise bzw. Fahreingriffe, zur Führung zu einer zum Laden geeigneten Ladeposition angeboten werden.

Neben dem erfindungsgemäßen Verfahren betrifft die Erfindung auch ein Kraftfahrzeug, wobei das Kraftfahrzeug eine Steuereinrichtung umfasst, die zur Durchführung eines erfindungsgemäßen Verfahrens ausgebildet ist. Vorzugsweise umfasst das Kraftfahrzeug zusätzlich eine erste und/oder eine zweite Erfassungseinrichtung, die zur Erfassung der ersten und/oder der zweiten Positionsinformation bei einer Durchführung des erfindungsgemäßen Verfahrens ausgebildet sind. Das erfindungsgemäße Kraftfahrzeug kann die im Rahmen der Erläuterungen des erfindungsgemäßen Verfahrens beschriebenen Merkmale mit den dort genannten Vorteilen aufweisen.

Weitere Vorteile und Einzelheiten der Erfindung zeigen die im Folgenden erläuterten Ausführungsbeispiele sowie die zugehörigen Figuren. Dabei zeigen schematisch:
- Fig. 1: ein Ablaufdiagramm eines erfindungsgemäßen Verfahrens, und
- Fig. 2: eine Positionierung eines erfindungsgemäßen Kraftfahrzeugs in einer Ladeposition.

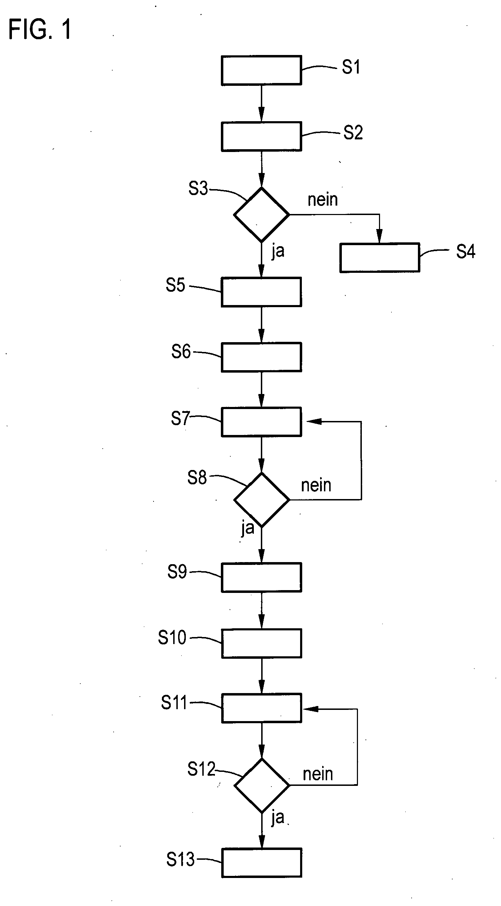

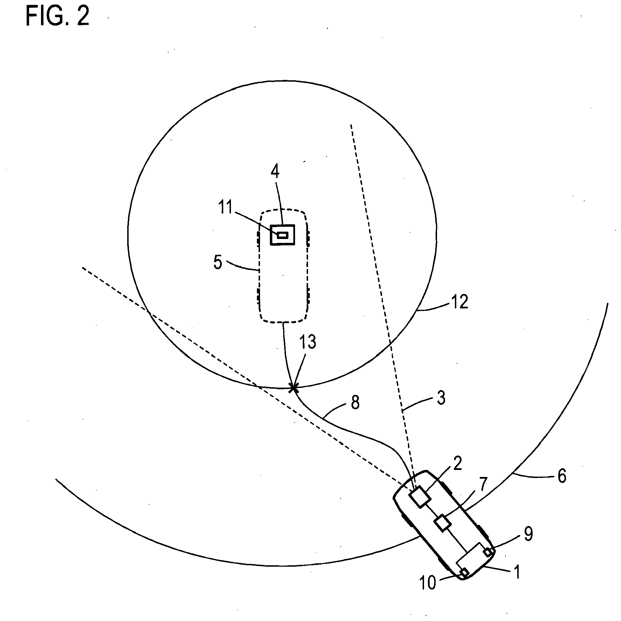

Fig. 1 zeigt ein Ablaufdiagramm eines Verfahrens zu Positionierung eines Kraftfahrzeugs 1 in einer zum kontaktlosen Laden eines Energiespeichers des Kraftfahrzeugs 1 durch eine Ladeplatte 4 geeigneten Ladeposition 5. In Fig. 2 ist die Führung des Kraftfahrzeugs 1 in die Ladeposition 5 schematisch dargestellt. Im Rahmen der Erläuterung des in Fig. 1 gezeigten Verfahrens wird zur klaren Darstellung des Verfahrens die jeweilige Fahrsituation mit Bezug auf Fig. 2 erläutert.

In Schritt S1 wird zunächst durch eine erste Erfassungseinrichtung des Kraftfahrzeugs 1 ein Vorhandensein der Ladeplatte 4 im Umfeld des Kraftfahrzeugs erfasst. Die erste Erfassungseinrichtung umfasst eine Kamera 2 mit einem Erfassungsbereich 3 und einer zugeordneten nicht dargestellten Bildverarbeitungseinrichtung. Die Kamera 2 erfasst Umfelddaten, wobei in den Umfelddaten die Ladeplatte 4 erkannt wird.

Nach Erkennung der Ladeplatte 4 im Umfeld des Kraftfahrzeugs 1 wird in Schritt S2 durch eine Einrichtung des Kraftfahrzeugs 1, beispielsweise durch ein Display oder einen Lautsprecher, ein Hinweis an einen Fahrer des Kraftfahrzeugs 1 ausgegeben, der diesen auf das Vorhandensein der Ladeplatte 4 im Kraftfahrzeugumfeld hinweist. In einer nicht dargestellten Weiterbildungen des Verfahrens kann eine entsprechende Hinweisgabe ergänzt davon abhängig sein, ob durch Auswertung der Umfelddaten ermittelt wird, dass die Ladeplatte 4 frei ist, das heißt, dass sich kein weiteres Kraftfahrzeug in der Ladeposition befindet, oder die Hinweisgabe kann von einem Ladezustand des Energiespeichers des Kraftfahrzeugs 1 abhängig sein.

In Schritt S3 wird ermittelt, ob ein Fahrer eine automatische Führung des Kraftfahrzeugs bzw. eine Unterstützung des Fahrers durch Fahreingriffe bei der Führung in die Ladeposition 5 wünscht. Hierzu wird ermittelt, ob der Fahrer mit einer entsprechenden Bedieneingabe auf den im Schritt S2 gegebenen Hinweis reagierte. Hierzu können beliebige Bedienmittel in dem Kraftfahrzeug 1 vorgesehen sein. In alternativen Ausführungsformen des Verfahrens ist es auch möglich, den Fahrer bei der Führung des Kraftfahrzeugs 1 in die Ladeposition 5 ausschließlich durch Gabe von Fahrhinweisen zu unterstützen. Das weitere Verfahren verläuft in diesem Fall ähnlich, wobei eine Bestimmung von Fahreingriffen jeweils durch eine Bestimmung von entsprechenden Fahrhinweisen ersetzt ist.

Ist eine Führung des Kraftfahrzeugs 1 in die Ladeposition 5 durch einen Fahrer nicht gewünscht, beispielsweise weil dieser seine Fahrt fortsetzen möchte, so wird in Schritt S4 der normale Fahrbetrieb fortgesetzt. Ist eine Führung in die Ladeposition 5 jedoch gewünscht, so erfolgt in den Schritten S5 bis S12 eine Führung des Kraftfahrzeugs 1 in die Ladeposition 5.

Wie im Folgenden noch detailliert dargestellt, werden im Rahmen dieser Führung zwei Erfassungseinrichtungen genutzt. Eine erste Erfassungseinrichtung, die die Kamera 2 umfasst, stellt eine relativ grobe erste Positionsinformation bereit, die jedoch bereits in einer relativ großen Erfassungsreichweite, die durch den Kreis 6 dargestellt ist, erfassbar ist. Nach einer ausreichenden Annäherung des Kraftfahrzeugs 1 an die Ladeplatte 4 erreicht das Kraftfahrzeug 1 eine durch den Kreis 12 dargestellte zweite Erfassungsreichweite, innerhalb der durch eine zweite Erfassungseinrichtung eine zweite Positionsinformation erfassbar ist. Zur Erfassung der zweiten Positionsinformation umfasst die zweite Erfassungseinrichtung die Empfangseinrichtungen 9, 10, die im Kraftfahrzeug 1 beabstandet voneinander angeordnet sind. Diese können innerhalb der zweiten Erfassungsreichweite Funksignale einer Kommunikationseinrichtung 11 der Ladeplatte 4 erfassen und analysieren, um die zweite Positionsinformation zu bestimmen.

Im Schritt S5 befindet sich das Kraftfahrzeug 1 wie in Fig. 2 dargestellt noch relativ weit von der Ladeplatte 4 entfernt. Das Kraftfahrzeug 1 befindet sich somit außerhalb der zweiten Erfassungsreichweite, womit über die zweite Erfassungseinrichtung noch keine Bestimmung der relativen Position der Ladeposition zu dem Kraftfahrzeug 1 möglich ist. Daher erfolgt im Schritt S5 zunächst eine Bestimmung einer ersten Positionsinformation durch die erste Erfassungseinrichtung, die die Kamera 2 umfasst. Durch einen Bilderkennungsalgorithmus wird aus Bilddaten der Kamera 2 die relative Position der Ladeplatte 4 zu dem Kraftfahrzeug 1 ermittelt und mit Hilfe einer in der Steuereinrichtung 7 gespeicherten Kraftfahrzeuggeometrie wird daraus eine Ladeposition 5 bestimmt, in die das Kraftfahrzeug 1 geführt werden soll.

Diese erste Positionsinformation wird der Steuereinrichtung 7 des Kraftfahrzeugs 1 bereitgestellt, die in Schritt S6 eine Trajektorie von der Ist-Position des Kraftfahrzeugs 1 zu der Ladeposition 5 berechnet. Verfahren zur Berechnung einer Trajektorie zur Führung eines Kraftfahrzeugs zu einer bestimmten Position sind im Stand der Technik bekannt und sollen nicht detailliert erläutert werden.

Im Rahmen der Berechnung der Trajektorie 8 durch die Steuereinrichtung 7 soll im dargestellten Verfahren berücksichtigt werden, dass die erste Positionsinformation fehlerbehaftet ist. Die Bestimmung einer relativen Lage einer Ladeposition 5 zum Kraftfahrzeug 1 aus den durch die Kamera 2 erfassten Umfelddaten erlaubt nur eine grobe Bestimmung der relativen Lage der Ladeplatte 4 zum Kraftfahrzeug 1 und somit nur eine grobe Bestimmung der Ladeposition 5. Daher soll im dargestellten Verfahren innerhalb der zweiten Erfassungsreichweite, die durch den Kreis 12 dargestellt ist, eine durch die zweite Erfassungseinrichtung erfasste zweite Positionsinformation zur Positionierung des Kraftfahrzeugs 1 bezüglich der Ladeplatte 4 genutzt werden. Beschreibt die zweite Positionsinformation eine relative Lage der Ladeposition zu dem Kraftfahrzeug, die von der ersten Positionsinformation abweicht und ändert sich somit die Ladeposition 5, in die das Kraftfahrzeug 1 geführt werden soll, sind somit Änderungen an der Trajektorie 8 erforderlich. Es ist wünschenswert, dass bei einem Erreichen der zweiten Erfassungsreichweite kinematisch maximale Möglichkeiten zur Korrektur der Trajektorie 8 des Kraftfahrzeugs 1 gegeben sind, das heißt, dass eine möglichst flexible Führung in dem Bereich der Trajektorie 8 innerhalb der zweiten Erfassungsreichweite möglich ist.

Um dies zu erreichen wird durch die Steuereinrichtung 7 der Punkt 13 prognostiziert, an dem die Trajektorie 8 die durch den Kreis 12 dargestellte zweite Erfassungsreichweite erreicht. Die Trajektorie 8 wird innerhalb der durch die Konstruktion des Kraftfahrzeugs 1 vorgegebenen Randbedingungen, insbesondere unter Berücksichtigung eines maximalen Lenkwinkels, derart berechnet, dass ein Querführungsparameter, insbesondere der momentane Lenkwinkel, in dem Bereich der Trajektorie 8 von dem Punkt 13 zur Ladeposition 5 maximal von einem vorgegebenen Grenzwert, insbesondere einem maximalen Lenkwinkel, beabstandet ist.

In Schritt S7 erfolgt eine automatische bzw. assistierte Führung des Kraftfahrzeugs 1 entlang der Trajektorie 8. Es ist dabei möglich, dass der Fahrer des Kraftfahrzeugs 1 die automatische Führung entlang der Trajektorie 8 dauerhaft überwachen muss, es ist jedoch auch möglich, dass die Führung automatisiert erfolgt und keine Überwachung durch einen Fahrer erforderlich ist. Während der Führung des Kraftfahrzeugs 1 entlang der Trajektorie 8 wird wiederholt durch die erste Erfassungseinrichtung durch Auswertung der Umffelddaten, die durch die Kamera 2 erfasst wurden, eine aktualisierte erste Positionsinformation bestimmt und die Führung erfolgt anschließend entlang einer Trajektorie, die in Abhängigkeit der aktualisierten ersten Positionsinformation bestimmt wurde.

In Schritt S8 wird überprüft, ob das Kraftfahrzeug 1 in den durch den Kreis 12 dargestellten Bereich eingedrungen ist, das heißt, ob sich das Kraftfahrzeug 1 innerhalb der zweiten Erfassungsreichweite befindet. Ist dies nicht der Fall, so wird das Verfahren ab Schritt S7 wiederholt.

Mit dem Eindringen des Kraftfahrzeugs 1 in den durch den Kreis 12 markierten Bereich befindet sich das Kraftfahrzeug 1 in einem Empfangsbereich, in dem Funksignale von der Kommunikationseinrichtung 11 der Ladeplatte 4 empfangbar sind. Die Empfangseinrichtungen 9, 10 der zweiten Erfassungseinrichtung empfangen in Schritt S9 diese Funksignale und werten sie aus, um eine relative Position der Ladeposition 5 bzw. der Ladeplatte 4 zu dem Kraftfahrzeug 1 zu ermitteln. Hierzu werden relative Amplituden und Laufzeiten des Funksignals zu den Empfangseinrichtungen 9, 10 ausgewertet. Die zweite Positionsinformation, die durch die zweite Erfassungseinrichtung aus den empfangenen Funksignalen bestimmt wird, beschreibt die relative Position zwischen Ladeposition 5 bzw. Ladeplatte 4 und Kraftfahrzeug 1 wesentlich exakter als die vorangehend genutzte erste Positionsinformation.

Daher kann eine Berechnung einer angepassten Trajektorie in Schritt S10 derart erfolgen, dass das Kraftfahrzeug 1 in eine Ladeposition 5 geführt wird, in der eine nicht gezeigte fahrzeugseitige Ladeplatte sehr exakt bezüglich der infrastrukturseitigen Ladeplatte 4 positioniert ist.

In Schritt S11 erfolgt eine Führung entlang der in Schritt S10 bestimmten Trajektorie. In Schritt S12 wird geprüft, ob das Kraftfahrzeug 1 die Ladeposition 5 erreicht hat. Ist dies nicht der Fall, so wird Schritt S11 wiederholt. Wie bereits zu Schritt S7 erläutert kann während der Führung des Kraftfahrzeugs entlang der Trajektorie 8 eine aktualisierte zweite Positionsinformation bestimmt werden, und die Trajektorie kann entsprechend angepasst werden.

Wurde ermittelt, dass die Ladeposition erreicht wurde, so kann in Schritt S13 das Kraftfahrzeug abgestellt werden und ein Ladevorgang kann eingeleitet werden.

In einer alternativen Ausführungsform des Verfahrens wäre es möglich innerhalb der zweiten Erfassungsreichweite die Fahreingriffe bzw. Hinweise an einen Fahrer zusätzlich in Abhängigkeit der ersten Positionsinformation zu bestimmen. Beispielsweise kann auch während der Führung des Kraftfahrzeugs von dem Punkt 13 in die Ladeposition 5 die Kamera 2 Umfelddaten erfassen und aus diesen kann eine Position der Ladeplatte 4 extrahiert werden. Die Fahrhinweise bzw. Fahreingriffe können somit sowohl von der ersten als auch von der zweiten Positionsinformation abhängen, wobei eine Gewichtung der Positionsinformationen im Rahmen der Bestimmung des Fahrhinweises bzw. des Fahreingriffes insbesondere in Abhängigkeit eines Abstands zwischen dem Kraftfahrzeug 1 und der Ladeposition 5 erfolgen kann.

## Patentansprüche

1. Verfahren zur Positionierung eines Kraftfahrzeugs in einer zum kontaktloses Laden eines Energiespeichers des Kraftfahrzeugs durch eine Ladeplatte geeigneten Ladeposition, umfassend die Schritte:
a. Erfassen einer die relative Position der Ladeposition zu dem Kraftfahrzeug beschreibenden ersten Positionsinformation durch eine erste Erfassungseinrichtung mit einer ersten Erfassungsreichweite,
b. Führen des Kraftfahrzeugs in Richtung der Ladeposition durch Auslösen wenigstens eines von der ersten Positionsinformation abhängigen, längs- und/oder querführenden Fahreingriffs und/oder Auslösen wenigstens eines die Führung des Kraftfahrzeugs betreffenden, von der ersten Positionsinformation abhängigen Fahrhinweises an einen Fahrer des Kraftfahrzeugs durch eine Steuereinrichtung des Kraftfahrzeugs,
c. Erfassen einer zweiten Positionsinformation durch eine zweite Erfassungseinrichtung mit einer gegenüber der ersten Erfassungsreichweite kürzeren zweiten Erfassungsreichweite, und
d. Führen des Kraftfahrzeugs zu der Ladeposition durch Auslösen wenigstens eines von der zweiten Positionsinformation abhängigen, längs- und/oder querführenden weiteren Fahreingriffs und/oder Auslösen wenigstens eines die Führung des Kraftfahrzeugs betreffenden, von der zweiten Positionsinformation abhängigen weiteren Fahrhinweises an einen Fahrer des Kraftfahrzeugs durch die Steuereinrichtung des Kraftfahrzeugs,
wobei die erste Erfassungseinrichtung wenigstens eine Sensoreinrichtung umfasst, durch die das Kraftfahrzeugumfeld betreffende Umfelddaten erfasst werden, wonach die erste Positionsinformation in Abhängigkeit der Umfelddaten bestimmt wird,
**dadurch gekennzeichnet,**
**dass** die zweite Erfassungseinrichtung wenigstens eine Empfangseinrichtung zum Empfang eines durch eine der Ladeplatte oder dem Kraftfahrzeug zugeordnete Sendeeinrichtung ausgesendeten Funksignals umfasst, wobei durch die zweite Erfassungseinrichtung die zweite Positionsinformation durch Auswertung des Funksignals bestimmt wird, wobei vor Schritt a) durch die erste Erfassungseinrichtung ein Vorhandensein der Ladeplatte im Umfeld des Kraftfahrzeugs erfasst wird, wonach ein eine Nutzbarkeit der Ladeplatte betreffender Ladeplattenhinweis an den Fahrer des Kraftfahrzeugs ausgegeben wird, wonach das Verfahren in Abhängigkeit einer Bedieneingabe des Fahrers mit Schritt a) zur Führung des Kraftfahrzeugs zu der zum kontaktloses Laden des Energiespeichers durch die Ladeplatte geeigneten Ladeposition fortgesetzt oder abgebrochen wird.

2. Verfahren nach Anspruch 1,
**dadurch gekennzeichnet,**
**dass** als Sensoreinrichtung wenigstens eine Kamera verwendet wird.

3. Verfahren nach Anspruch 1 oder 2,
**dadurch gekennzeichnet,**
**dass** die zweite Erfassungseinrichtung mehrere der Empfangseinrichtungen zum Empfang des Funksignals aufweist, wobei die zweite Positionsinformation in Abhängigkeit von Empfangsstärken des Funksignals an und/oder Signallaufzeiten des Funksignals zu den Empfangseinrichtungen bestimmt wird.

4. Verfahren nach einem der vorangehenden Ansprüche,
**dadurch gekennzeichnet,**
**dass** die Führung des Kraftfahrzeugs in Schritt b) entlang einer Trajektorie von der momentanen Kraftfahrzeugposition zu der Ladeposition erfolgt, wobei die Trajektorie durch die Steuereinrichtung derart ermittelt und/oder angepasst wird, dass in zumindest einem Abschnitt der Trajektorie ein durch die Trajektorie vorgegebener Querführungsparameter des Kraftfahrzeugs von einem vorgegebenen Grenzwert für den Querführungsparameter maximal beabstandet ist.

5. Verfahren nach einem der vorangehenden Ansprüche,
**dadurch gekennzeichnet,**
**dass** in Schritt d) der Fahrhinweis und/oder der Fahreingriff zusätzlich in Abhängigkeit der ersten Positionsinformation bestimmt werden.

6. Kraftfahrzeug,
**dadurch gekennzeichnet,**
**dass** es eine Steuereinrichtung (7) umfasst, die zur Durchführung des Verfahrens nach einem der vorangehenden Ansprüche ausgebildet ist.

## Claims

1. Method for positioning a motor vehicle in a suitable charging position for contactless charging of an energy store of the motor vehicle by means of a charging plate, comprising the steps:
a. acquisition of a first item of position information describing the relative position of the charging position to the motor vehicle by a first acquisition device with a first acquisition range,
b. guiding of the motor vehicle in the direction of the charging position through triggering of at least one longitudinally or laterally guiding driving intervention dependent on the first item of position information and/or triggering of at least one driving instruction relating to the guiding of the motor vehicle, dependent on the first item of position information, to a driver of the motor vehicle by a control device of the motor vehicle,
c. acquisition of a second item of position information by a second acquisition device with a shorter second acquisition range than the first acquisition range, and
d. guiding of the motor vehicle to the charging position through triggering of at least one longitudinally or laterally guiding further driving intervention dependent on the second item of position information and/or triggering of at least one further driving instruction relating to the guiding of the motor vehicle, dependent on the second item of position information, to a driver of the motor vehicle by the control device of the motor vehicle,
whereby the first acquisition device comprises at least one sensor device, through which environment data relating to the motor vehicle environment are acquired, after which the first item of position information is determined in dependence on the environment data,
**characterised in that** the second acquisition device comprises at least one receiver device for the reception of a radio signal transmitted by a transmitter device assigned to the charging plate or the motor vehicle, whereby the second item of position information is determined by the second acquisition device through evaluation of the radio signal, whereby, before step a), a presence of the charging plate in the environment of the motor vehicle is acquired by the first acquisition device, after which a charging plate instruction relating to a usability of the charging plate is issued to the driver of the motor vehicle, after which, in dependence on an operating input on the part of the driver, the method is continued with step a) for the guiding of the motor vehicle to the suitable charging position for contactless charging of the energy store by means of the charging plate or is cancelled.

2. Method according to claim 1, **characterised in that** at least one camera is used as sensor device.

3. Method according to claim 1 or 2,
**characterised in that**
the second acquisition device has a plurality of receiver devices for the reception of the radio signal, whereby the second item of position information is determined in dependence on reception strengths of the radio signal and/or signal propagation times of the radio signal to the receiver devices.

4. Method according to any one of the preceding claims,
**characterised in that**
the guiding of the motor vehicle in step b) takes place along a trajectory from the current position of the motor vehicle to the charging position, whereby the trajectory is established by the control device and/or adapted in such a way that in at least one section of the trajectory a lateral-guidance parameter of the motor vehicle predefined by the trajectory is at maximum distance from a predefined limit for the lateral-guidance parameter.

5. Method according to any one of the preceding claims,
**characterised in that**,
in step d), the driving instruction and/or the driving intervention is determined additionally in dependence on the first item of position information.

6. Motor vehicle,
**characterised in that**
it comprises a control device (7), which is configured to carry out the method according to any one of the preceding claims.

## Revendications

1. Procédé destiné à placer un véhicule automobile dans une position de chargement convenant au chargement sans contact d'une batterie du véhicule automobile par un plateau de chargement, comprenant les étapes :
a. détection d'une première information de position décrivant la position relative de la position de chargement par rapport au véhicule automobile par un premier dispositif de détection avec une première portée de détection,
b. conduite du véhicule automobile en direction de la position de chargement par déclenchement d'au moins une intervention de conduite dépendante de la première information de position et conduisant en direction longitudinale et/ou en direction transversale et/ou déclenchement d'au moins une indication de conduite concernant la conduite du véhicule automobile et dépendante de la première information de position à l'adresse d'un conducteur du véhicule automobile par un dispositif de commande du véhicule automobile,
c. détection d'une deuxième information de position par un deuxième dispositif de détection avec une deuxième portée de détection plus courte que la première portée de détection, et
d. conduite du véhicule automobile jusqu'à la position de chargement par déclenchement d'au moins une autre intervention de conduite dépendante de la deuxième information de position et conduisant en direction longitudinale et/ou en direction transversale et/ou déclenchement d'au moins une autre indication de conduite concernant la conduite du véhicule automobile et dépendante de la deuxième information de position à l'adresse d'un conducteur du véhicule automobile par le dispositif de commande du véhicule automobile,
dans lequel le premier dispositif de détection comprend au moins un dispositif capteur par lequel les données d'environnement concernant l'environnement de véhicule automobile sont détectées, à la suite de quoi la première information de position est déterminée en fonction des données d'environnement,
**caractérisé en ce que**
le deuxième dispositif de détection comprend au moins une unité de réception destinée à la réception d'un signal radio émis par un dispositif d'émission associé au plateau de chargement ou au véhicule automobile, dans lequel la deuxième information de position est déterminée par le deuxième dispositif de détection en évaluant le signal radio, dans lequel, avant l'étape a), une existence du plateau de chargement dans l'environnement du véhicule automobile est détectée par le premier dispositif de détection, à la suite de quoi une indication de plateau de chargement concernant la possibilité d'utiliser le plateau de chargement est fournie au conducteur du véhicule automobile, à la suite de quoi le procédé est poursuivi ou interrompu en fonction d'une indication de commande du conducteur avec l'étape a) en vue de la conduite du véhicule automobile jusqu'à la position de chargement convenant au chargement sans contact de la batterie par le plateau de chargement.

2. Procédé selon la revendication 1,
**caractérisé en ce que**
au moins une caméra est utilisée comme dispositif capteur.

3. Procédé selon la revendication 1 ou 2,
**caractérisé en ce que**
le deuxième dispositif de détection comporte plusieurs des dispositifs de réception afin de recevoir le signal radio, dans lequel la deuxième information de position est déterminée en fonction d'intensités de réception du signal radio et/ou de temps de propagation de signal du signal radio jusqu'aux dispositifs de réception.

4. Procédé selon l'une quelconque des revendications précédentes,
**caractérisé en ce que**
la conduite du véhicule automobile à l'étape b) s'effectue le long d'une trajectoire allant de la position momentanée du véhicule automobile à la position de chargement, dans lequel la trajectoire est déterminée et/ou adaptée par le dispositif de commande de telle sorte que, dans au moins un tronçon de la trajectoire, un paramètre de conduite transversale, prédéterminé par la trajectoire, du véhicule automobile est à une distance maximale d'une valeur limite prédéterminée pour le paramètre de conduite transversale.

5. Procédé selon l'une quelconque des revendications précédentes,
**caractérisé en ce que**,
dans l'étape d), l'indication de conduite et/ou l'intervention de conduite sont déterminées en plus en fonction de la première information de position.

6. Véhicule automobile,
**caractérisé en ce que**
il comprend un dispositif de commande (7) qui est conçu pour mettre en oeuvre le procédé selon l'une quelconque des revendications précédentes.
